# EUROPÄISCHE PATENTSCHRIFT

(11) **EP 2 668 703 B1**
(45) Veröffentlichungstag und Bekanntmachung des Hinweises auf die Patenterteilung: **22.12.2021**
(21) Anmeldenummer: 12701828.1
(22) Anmeldetag: 17.01.2012
(51) Int. Cl.: H02B 13/00, H02B 13/035

(54) **ANORDNUNG ZUR ISOLIERTEN KOPPLUNG VON ELEKTRISCH LEITENDEN KOMPONENTEN IN SCHALTANLAGEN**
ARRANGEMENT FOR COUPLING ELECTRICALLY CONDUCTIVE COMPONENTS IN SWITCHGEAR IN AN INSULATED MANNER
ENSEMBLE PERMETTANT LE COUPLAGE ISOLÉ DE COMPOSANTS ÉLECTROCONDUCTEURS DANS UN APPAREILLAGE DE CONNEXION

(30) Priorität: 28.01.2011 DE 102011009757; 02.08.2011 DE 102011109152
(43) Veröffentlichungstag der Anmeldung: 04.12.2013
(73) Patentinhaber: Hitachi Energy Switzerland AG, 5400 Baden (CH)
(72) Erfinder: PETERS, Hauke, 63457 Hanau (DE); MANN, Michael, 63743 Aschaffenburg (DE); BRÜGGEMANN, Bernd, 63456 Hanau (DE)
(74) Vertreter: Michalski Hüttermann & Partner Patentanwälte mbB
(86) Internationale Anmeldenummer: PCT/EP2012/000184
(87) Internationale Veröffentlichungsnummer: WO 2012/100917

(56) Entgegenhaltungen:
- EP-A1- 1 111 748
- EP-A2- 0 199 891
- EP-A2- 0 210 061
- EP-A2- 0 570 688
- EP-A2- 0 624 924
- JP-A- 5 056 528

## Beschreibung

Die Erfindung betrifft eine Anordnung zur isolierten Kopplung von elektrisch leitenden Komponenten, insbesondere in gasisolierten Schaltanlagen, umfassend eine erste elektrisch leitende Komponente und eine zweite elektrisch leitende Komponente, wobei die Komponenten durch ein flexibles Isolierelement voneinander getrennt sind.

Beispielhafte Anordnungen zur Kopplung von Komponenten in gasisolierten Schaltanlagen des Mittelspannungsbereichs sind bereits aus der DE 199 40 634 A1 bekannt geworden. Fig. 4 der DE 199 40 634 A1 zeigt zwei isolierte Leiter, die durch einen Kontaktring miteinander elektrisch leitend verbunden sind. Der Kontaktring dient als Kupplung. Über diese Kupplung ist ein langgestrecktes Rohr aus einem elastischen Isolierstoff gelegt. Mit der Zunahme der Isolierschichtdicke des Isolierstoffes geht seine Flexibilität zurück, was sich insbesondere nachteilig auf die Isolierung von Steckverbindern auswirkt.

Im Mittelspannungs- und Hochspannungsbereich werden gasisolierte Schaltanlagen eingesetzt, wobei in diesen verschiedene Steckverbindungen realisiert werden. Aus dem Stand der Technik ist es insbesondere bekannt, Kabelstecker oder Komponentenkuppler für Steckverbindungen zu verwenden. Diese Verbindungstechnik wurde aus der Mittelspannungstechnik übernommen.

Aus der EP 111 748 A1 ist ein Verbindungssystem zwischen zwei Mittel- oder Hochspannungszellen bekannt, das eine Isolierhülse aus einem biegsamen Material umfasst. Die Isolierhülse ist derart ausgebildet, dass sie sich je nach Bedarf in der Länge zusammenziehen bzw. strecken kann und somit in der Länge elastisch anpassbar ist. Vor einer Montage der Isolierhülse in das Verbindungssystem ist die Isolierhülse an beiden Enden offen, so dass sie keinen abgeschlossenen inneren Bereich für die Aufnahme von Isoliermittel bietet.

Die JP 5 056528 A offenbart einen thermischen Sehrumpfbehälter, der mit einem Silikongel gefüllt ist und eine durch den Sehrumpfbehälter geführte, leitende Komponente isolierend in sich aufnimmt. Das Innere des Sehrumpfbehälters ist für sich genommen kein abgeschlossener Raum, sondern wird erst durch die durchlaufende leitende Komponente derart abgedichtet, dass kein Silikongel austreten kann.

Die EP 0 199 891 A2 offenbart eine Verbindungsvorrichtung für Gas-isolierte Schaltanlagen, mit in den Seitenwänden der Schaltanlageneingesetzten und zum Anschluss von Sammelschienen ausgebildeten Durchführungen, die im Inneren der Schaltanlagen und nach außen jeweils die Form eines Außenkonus aufweisen, dadurch gekennzeichnet, dass die Sammelschienenenden von zwei benachbarten Schaltanlagen durch eine schraubbare Lasche verbindbar sind und dass die Verbindungsstelle der Sammelschienen und die äußeren Außenkonen der beiden Durchführungen von einer umkrempelbaren Manschette abgedeckt sind.

EP 0 624 924 A2 beschreibt einen Verbinder zum Herstellen einer Verbindung zwischen wenigstens einem Kabel, das im wesentlichen parallel zu der Wandung eines Gehäuses einer Schalteinrichtung verläuft, und dem Inneren des Gehäuses, wobei der Verbinder eine untere Hülse und eine obere Hülse aufweist.

EP 0 570 688 A2 beschreibt ein Schaltgerät, das eine Vielzahl von Vorrichtungskammern, die nebeneinander angeordnet sind, eine Hauptschaltkreisvorrichtung, die innerhalb jeder der Vor-richtungskammern angeordnet ist und Vorrichtungselemente, die integral oder unabhängig zueinander innerhalb der Schaltkreisvorrichtungen ausgebildet sind, aufweist. EP 0 210 061 A2 beschreibt einen Gegenstand, der eine Doppelwand und eine reibungsmindernde Einreichtung zwischen den beiden Wänden der Doppelwand umfasst.

Der Erfindung liegt daher die Aufgabe zugrunde, eine problemlose isolierten Verbindung von Komponenten, insbesondere in komplexen gasisolierten Schaltanlagen, zu realisieren, wobei dazu eine Isolierung zur Verfügung stehen soll, die auch bei zunehmender Stärke hochflexibel bleibt und insbesondere ein Umstülpen oder Verschieben zu ermöglichen.

Erfindungsgemäß wird die voranstehende Aufgabe durch die Merkmale der unabhängigen Patentansprüche gelöst.

Weitere vorteilhafte Ausführungsformen werden in den abhängigen Ansprüchen definiert.

In der Zeichnung zeigen
- Fig. 1: eine Schnittansicht einer Anordnung zur Kopplung von Komponenten in gasisolierten Schaltanlagen im montierten bzw. gekoppelten Zustand,
- Fig. 2: eine Schnittansicht der Anordnung zur Kopplung von Komponenten in gasisolierten Schaltanlagen gemäß Fig. 1 im demontierten bzw. entkoppelten Zustand,
- Fig. 3: ein Ausführungsbeispiel eines Isolierelements.

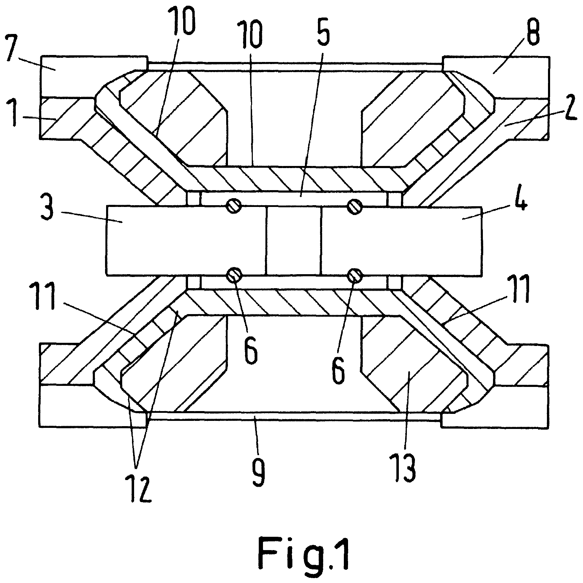

Fig. 1 zeigt eine Anordnung mit einem nach außen gerichteten ersten Isolierkörper 1 und einem nach außen gerichteten zweiten Isolierkörper 2. Eine isolierte Leitung weist einen ersten isolierten Leiter 3 und einen zweiten isolierten Leiter 4 auf. Dabei ist der erste isolierte Leiter 3 mit dem ersten Isolierkörper 1 und der zweite isolierte Leiter 4 mit dem zweiten Isolierkörper 2 verbunden. Die isolierten Leiter 3, 4 liegen einander gegenüber.

Zweiteilige Verbindungsmittel 5 sind derart an den ersten isolierten Leiter 3 und den zweiten isolierten Leiter 4 angebracht, dass die isolierten Leiter 3, 4 miteinander verbunden sind. Ein erster Teil der Verbindungsmittel 5 liegt dabei unterhalb der isolierten Leiter 3, 4. Ein zweiter Teil der Verbindungsmittel 5 liegt oberhalb der isolierten Leiter 3, 4.

Die isolierten Leiter 3, 4 und die Verbindungsmittel 5 sind über Kontakte 6 derart miteinander verbunden, dass eine elektrische Verbindung zwischen den isolierten Leitern 3, 4 ermöglicht ist. An die isolierten Leiter 3, 4 kann eine Hochspannung angelegt werden, so dass eine Stromführung durch die isolierten Leiter 3, 4 realisierbar ist.

Die mit der Hochspannung beaufschlagten isolierten Leiter 3, 4 sowie die Verbindungsmittel 5 sind in einem Gehäuse 7, 8 sowie einer Schutzummantelung 9 aufgenommen. Das Gehäuse 7, 8 besteht aus einem ersten Gehäuseteil 7 und einem zweiten Gehäuseteil 8.

Die mit der Hochspannung beaufschlagten isolierten Leiter 3, 4 sowie die Verbindungsmittel 5 sind gegen das Gehäuse 7, 8 sowie gegen die Schutzummantelung 9 durch ein hochflexibles Isolierelement 10 elektrisch isoliert.

Die elektrische Isolation wird durch das speziell geformte Isolierelement 10 gewährleistet. Dieses wird durch leitfähige Steuerflächen und eine entsprechende konstruktive Auslegung dimensioniert.

Das Isolierelement 10 ist hochflexibel ausgeführt. Dies ist notwendig, damit sie sich auf den ersten Isolierkörper 1 und den zweiten Isolierkörper 2 aufziehen lässt und eine Grenzfläche 11 zwischen den Isolierkörpern 1, 2 und dem Isolierelement 10 dielektrisch fest wird.

Durch seine hochflexible Ausgestaltung mit einer große Weichheit bei hoher Formbeständigkeit, passt sich das Isolierelement 10 leicht an die unterschiedlich geformten Verbindungsmittel 5 und Isolierkörper 1, 2 an.

Die Form des Isolierelements 10 ist in gezeigtem Ausführungsbeispiel gemäß Fig. 1 so gewählt, dass ein Kragen 12 entsteht, in den Spanneinrichtungen 13 eingreifen. Die Spanneinrichtungen 13 dienen dazu, den Druck auf das Isolierelement 10 aufrecht zu erhalten und damit eine Spaltbildung an der Grenzfläche 11 zu verhindern.

Die Anordnung gemäß Fig. 1 kann von außen durch eine nicht gezeigte, geeignete Hülle geschützt werden. Die Spanneinrichtungen 13 sind federbelastet, damit Ausdehnungseffekte ausgeglichen werden können.

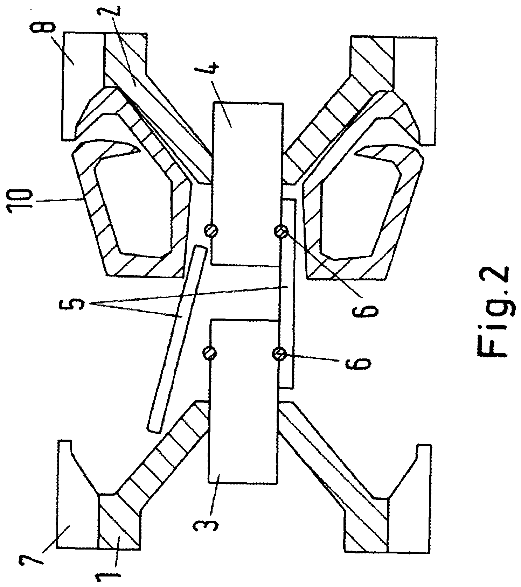

Fig. 2 zeigt, dass die Montage ähnlich wie bei üblichen Steckverbindungen erfolgen kann, nämlich indem Komponenten von Schaltanlagen zusammengeschoben werden. Dabei ist das flexible Isolierelement 10 auf einer Seite vormontiert und wird nach dem Zusammenschieben der Komponenten über die Spanneinrichtung 13 gespannt.

Fig. 2 kann man auch entnehmen, dass für eine Demontage eines Feldes in der Mitte einer gasisolierten Schaltanlage die Spanneinrichtungen 13 entfernt werden. Danach wird das Isolierelement 10 von einer Seite zur anderen umgestülpt. Eine hochflexible Ausgestaltung des Isolierelements 10 erleichtert das Umstülpen. Das umgestülpte Isolierelement 10 gibt die Verbindungsmittel 5 frei und erlaubt deren Demontage. Eine auf diese Weise entkoppelte Komponente einer Schaltanlage kann dann entfernt werden, ohne dass weitere in einen Gasraum eingreifende Arbeitsschritte nötig sind.

Das erste Gehäuseteil 7 nimmt hier einen ersten Isolierkörper 1 auf, welcher den ersten isolierten Leiter 3 aufnimmt und gegen das erste Gehäuseteil 7 elektrisch isoliert. Das zweite Gehäuseteil 8 nimmt einen zweiten Isolierkörper 2 auf welcher den zweiten isolierten Leiter 4 aufnimmt und gegen das zweite Gehäuseteil 8 elektrisch isoliert.

Das Isolierelement 10 ist durch jeweils eine Spanneinrichtung 13 am ersten Isolierkörper 1 und/oder am ersten Gehäuseteil 7 und am zweiten Isolierkörper 2 und/ oder am zweiten Gehäuseteil 8 fixiert. Dies ist in Fig. 1 gezeigt. Die Spanneinrichtungen 13 sind federbelastet, damit Ausdehnungseffekte ausgeglichen werden können. Das Isolierelement 10 weist an ihren beiden Enden jeweils einen Kragen 12 auf.

Das erste Gehäuseteil 7 und/oder das zweite Gehäuseteil 8 ist bzw. sind gasdicht in der Wand eines nicht gezeigten Gasraums aufgenommen, wobei der erste isolierte Leiter 3 bzw. der zweite isolierte Leiter 4 in den Gasraum hineinragt oder mit elektrischen Bauteilen innerhalb des Gasraums elektrisch leitend verbunden ist.

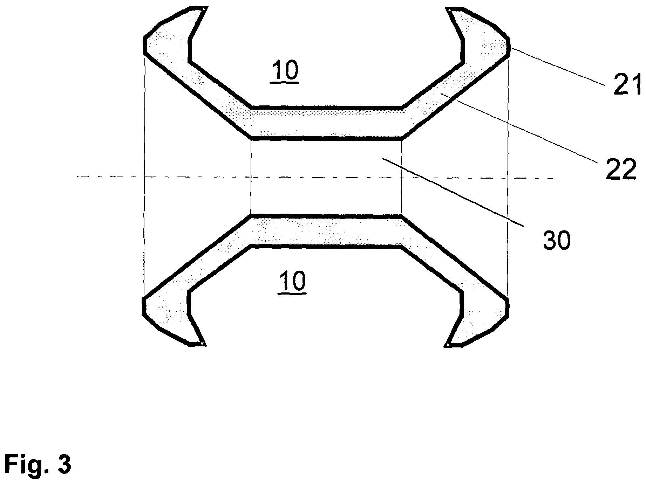

Fig. 3 zeigt eine beispielhafte Ausführung des Isolierelements 10, wobei das Isolierelement aus einer flexiblen Silikonhülle 21 besteht, die mit Silikonöl 22 oder hochviskösem Silikongel 22 gefüllt ist. Mit dem Bezugszeichen 30 ist der Hohlraum zur Aufnahme der unter Spannung stehenden Teile bzw. elektrisch leitenden Komponenten in Schaltanlagen bezeichnet.

### Bezugszeichenliste

- 1: erster Isolierkörper
- 2: zweiter Isolierkörper
- 3: erster isolierter Leiter
- 4: zweiter isolierter Leiter
- 5: Verbindungsmittel
- 6: Kontakt
- 7: erstes Gehäuseteil
- 8: zweites Gehäuseteil
- 9: Schutzummantelung
- 10: Isolierelement
- 11: Grenzfläche
- 12: Kragen
- 13: Spanneinrichtung
- 21: flexible Hülle
- 22: Isoliermittel
- 30: Hohlraum zur Aufnahme der unter Spannung stehenden Teile

## Patentansprüche

1. Isolierelement zur isolierten Kopplung von elektrisch Leitern (3, 4) in gasisolierten Schaltanlagen, welche
einen ersten isolierten elektrisch leitenden Leiter (3), der mit einem ersten Isolierkörper (1) verbunden ist, und einen zweiten isolierten elektrisch leitenden Leiter (4), der mit einem zweiten Isolierkörper (2) verbunden ist, aufweisen, wobei diese Leiter (3, 4) mit einem mehrteiligen Verbindungsmittel (5) elektrisch miteinander gekoppelt sind, die Leiter (3, 4) sowie die Verbindungsmittel (5) in einem Gehäuse (7, 8), aus einem ersten Gehäuseteil (7) und einem zweiten Gehäuseteil (8), sowie einer Schutzummantelung (9) aufgenommen sind, und das Isolierelement (10) angepasst ist, die Leiter (3, 4) und die Verbindungsmittel (5) gegen das Gehäuse (7, 8) sowie die Schutzummantelung (9) elektrisch zu isolieren, wobei
das flexible Isolierelement (10) hochflexibel ist, aus einer stabilen flexiblen Hülle (21) besteht, röhrenförmig ausgeführt ist, einen Hohlraum (30) zur Aufnahme der Leiter (3, 4) und des Verbindungsmittels (5) aufweist, und an seinen beiden Enden jeweils einen Kragen (12) aufweist, welche dazu angepasst sind, dass darin jeweils eine Spanneinrichtung (13) eingreifen kann, um damit den Druck auf das Isolierelement (10) aufrecht zu erhalten und damit eine Spaltbildung an einer Grenzfläche (11) zwischen den Isolierkörpern (1, 2) und dem Isolierelement (10) zu verhindern, und
das flexible Isolierelement (10) derart flexibel deformierbar ist, dass es umstülpbar ist, wodurch es das Verbindungsmittel (5) freigeben kann, und das Isolierelement **dadurch gekennzeichnet ist, dass** die flexible Hülle (21) eine flexible Silikonhülle ist, die mit einem Isoliermittel (22) gefüllt ist, wobei das Isoliermittel (22) aus einem flüssigen oder gel-artigen Material gebildet ist, und das Isoliermittel (22) Silikonöl oder hochvisköses Silikongel ist.

2. Isolierelement nach Anspruch 1, wobei das flexible Isolierelement (10) leitfähige Schichten (3) aufweist, wodurch Teile des flexiblen Isolierelements dielektrisch steuerbar sind.

3. Isolierelement nach einem der vorstehenden Ansprüche, wobei das flexible Isolierelement (10) derart flexibel deformierbar ist, dass es bei der Demontage der elektrisch leitenden Leiter (3, 4) aufrollbar ist, so dass es das Verbindungsmittel (5) freigibt.

4. Verwendung des Isolierelements nach einem der vorstehenden Ansprüche zum Isolieren einer Verbindung von Komponenten in gasisolierten Hochspannungsschaltanlagen.

5. Gasisolierte Hochspannungsschaltanlage, mit
einem ersten Gehäuse (7), in welchem ein erster elektrisch leitender Leiter (3) mittels eines ersten Isolierkörpers (1) elektrisch isoliert angeordnet ist, sowie
einem zweiten Gehäuse (8), in welchem ein zweiter elektrisch leitender Leiter (4) mittels eines zweiten Isolierkörpers (2) elektrisch isoliert angeordnet ist, wobei
die isolierten elektrisch leitenden Leiter (3, 4) mit einem mehrteiligen Verbindungsmittel (5) elektrisch leitend miteinander verbunden und mit diesem in dem Gehäuse (7, 8) sowie einer Schutzummantelung (9) aufgenommen sind, wobei die isolierten elektrischen Leiter (3, 4) sowie die Verbindungsmittel (5) gegen das Gehäuse (7, 8) sowie gegen die Schutzummantelung (9) durch ein hochflexibles Isolierelement (10) nach einem der vorstehenden Ansprüche elektrisch isoliert sind, und
das flexible Isolierelement (10) in montiertem Zustand am ersten Isolierkörper (1) und am zweiten Isolierkörper (2) anliegt, derart dass eine leitfähige Grenzfläche (11) zwischen den Isolierkörpern (1, 2) und dem flexiblen Isolierelement (10) dielektrisch fest ist.

6. Gasisolierte Hochspannungsschaltanlage nach Anspruch 5, umfassend weiterhin zwei Spanneinrichtungen (13), welche in jeweils einen der beiden Kragen (12) eingreifen und im Betrieb federbelastet sind.

7. Gasisolierte Hochspannungsschaltanlage nach einem der Ansprüche 5 bis 6, wobei das Verbindungsmittel (5) Kontakte (6) zur elektrischen Verbindung mit den Leitern (3, 4) aufweist.

8. Gasisolierte Hochspannungsschaltanlage nach einem Ansprüche 5 bis 7, wobei das Verbindungsmittel (5) zweiteilig ist, insbesondere halbschalenförmig.

## Claims

1. Insulating element for the insulated coupling of electrical conductors (3, 4) in gas-insulated switchgear assemblies which have a first insulated electrically conductive conductor (3), which is connected to a first insulating body (1), and a second insulated electrically conductive conductor (4), which is connected to a second insulating body (2), wherein these conductors (3, 4) are electrically coupled to one another by way of a multipartite connecting means (5), the conductors (3, 4) and also the connecting means (5) are received in a housing (7, 8), composed of a first housing part (7) and a second housing part (8), and also a protective sheathing (9), and the insulating element (10) is adapted for electrically insulating the conductors (3, 4) and the connecting means (5) from the housing (7, 8) and also the protective sheathing (9), wherein the flexible insulating element (10) is highly flexible, consists of a stable flexible sleeve (21), is of tubular design, has a cavity (30) for receiving the conductors (3, 4) and the connecting means (5) and has a collar (12) at each of its two ends, each of which collars are adapted for a clamping device (13) to be able to engage therein in order to thereby maintain the pressure on the insulating element (10) and thereby to prevent the formation of a gap at a boundary surface (11) between the insulating bodies (1, 2) and the insulating element (10), and the flexible insulating element (10) is flexibly deformable in such a way that it can be turned inside out, as a result of which it can release the connecting means (5), and the insulating element is **characterized in that** the flexible sleeve (21) is a flexible silicone sleeve which is filled with an insulating agent (22), wherein the insulating agent (22) is formed from a liquid or gel-like material, and the insulating agent (22) is silicone oil or high-viscosity silicone gel.

2. Insulating element according to Claim 1, wherein the flexible insulating element (10) has conductive layers (3), as a result of which parts of the flexible insulating element can be dielectrically controlled.

3. Insulating element according to either of the preceding claims, wherein the flexible insulating element (10) is flexibly deformable in such a way that it can be rolled up when the electrically conductive conductors (3, 4) are removed, so that it releases the connecting means (5) .

4. Use of the insulating element according to one of the preceding claims for insulating a connection of components in gas-insulated high-voltage switchgear assemblies.

5. Gas-insulated high-voltage switchgear assembly comprising a first housing (7), in which a first electrically conductive conductor (3) is arranged in a manner electrically insulated by means of a first insulating body (1), and also a second housing (8), in which a second electrically conductive conductor (4) is arranged in a manner electrically insulated by means of a second insulating body (2), wherein the insulated electrically conductive conductors (3, 4) are electrically conductively connected to one another by way of a multipartite connecting means (5) and are received with said connecting means in the housing (7, 8) and also a protective sheathing (9), wherein the insulated electrical conductors (3, 4) and also the connecting means (5) are electrically insulated from the housing (7, 8) and also from the protective sheathing (9) by a highly flexible insulating element (10) according to one of the preceding claims, and the flexible insulating element (10), in the mounted state, bears against the first insulating body (1) and against the second insulating body (2) in such a way that a conductive boundary surface (11) between the insulating bodies (1, 2) and the flexible insulating element (10) has good dielectric strength.

6. Gas-insulated high-voltage switchgear assembly according to Claim 5, furthermore comprising two clamping devices (13) which each engage into one of the two collars (12) and are spring-loaded during operation.

7. Gas-insulated high-voltage switchgear assembly according to either of Claims 5 and 6, wherein the connecting means (5) has contacts (6) for electrical connection to the conductors (3, 4).

8. Gas-insulated high-voltage switchgear assembly according to one of Claims 5 to 7, wherein the connecting means (5) has two parts, in particular in the form of half-shells.

## Revendications

1. Elément isolant destiné au couplage isolé de conducteurs électriques (3, 4) dans des appareillages de commutation à isolation gazeuse qui présentent un premier conducteur électroconducteur isolé (3) qui est connecté à un premier corps isolant (1), et un deuxième conducteur électroconducteur isolé (4) qui est connecté à un deuxième corps isolant (2), dans lequel ces conducteurs (3, 4) sont couplés électriquement les uns avec les autres par un moyen de connexion en plusieurs parties (5), les conducteurs (3, 4) ainsi que les moyens de connexion (5) sont reçus dans un boîtier (7, 8) composé d'une première partie de boîtier (7) et d'une deuxième partie de boîtier (8) ainsi que dans une gaine de protection (9), et l'élément isolant (10) est adapté pour isoler électriquement les conducteurs (3, 4) et les moyens de connexion (5) par rapport au boîtier (7, 8) ainsi que par rapport à la gaine de protection (9), dans lequel
l'élément isolant (10) est hautement flexible, est composé d'une enveloppe (21) flexible stable, est réalisé de manière tubulaire, présente une cavité (30) pour recevoir les conducteurs (3, 4) et le moyen de connexion (5), et présente à ses deux extrémités respectivement une collerette (12) qui est adaptée pour que respectivement un dispositif de serrage (13) puisse y venir en prise afin de maintenir ainsi la pression sur l'élément isolant (10) et d'empêcher ainsi une formation d'interstice au niveau d'une interface (11) entre les corps isolants (1, 2) et l'élément isolant (10), et
l'élément isolant flexible (10) est déformable de manière flexible de telle sorte qu'il peut être retourné de manière à pouvoir libérer le moyen de connexion (5), et
l'élément isolant est **caractérisé en ce que** l'enveloppe flexible (21) est une enveloppe en silicone flexible qui est remplie d'une matière isolante (22), la matière isolante (22) étant formée par une matière liquide ou gélatineuse, et la matière isolante (22) étant de l'huile de silicone ou un gel de silicone hautement visqueux.

2. Elément isolant selon la revendication 1, dans lequel l'élément isolant flexible (10) présente des couches conductrices (3) de sorte que certaines parties de l'élément isolant flexible peuvent être commandées de manière diélectrique.

3. Elément isolant selon l'une quelconque des revendications précédentes, dans lequel l'élément isolant flexible (10) est déformable de manière flexible de telle sorte que lors du démontage, le conducteur électroconducteur (3, 4) peut être enroulé de façon à libérer le moyen de connexion (5).

4. Utilisation de l'élément isolant selon l'une quelconque des revendications précédentes pour isoler une connexion de composants dans des appareillages de commutation haute tension à isolation gazeuse.

5. Appareillage de commutation haute tension à isolation gazeuse, comprenant
un premier boîtier (7) dans lequel est disposé un premier conducteur électroconducteur (3) de manière électriquement isolée au moyen d'un premier corps isolant (1),
ainsi qu'un deuxième boîtier (8) dans lequel est disposé un deuxième conducteur électroconducteur (4) de manière électriquement isolée au moyen d'un deuxième corps isolant (2),
dans lequel les conducteurs électroconducteurs isolés (3, 4) sont connectés l'un à l'autre de manière électriquement conductrice par un moyen de connexion en plusieurs parties (5) et sont reçus avec celui-ci dans le boîtier (7, 8) ainsi qu'avec une gaine de protection (9), les conducteurs électriques isolés (3, 4) ainsi que les moyens de connexion (5) étant électriquement isolés par rapport au boîtier (7, 8) ainsi que par rapport à la gaine de protection (9) par un élément isolant hautement flexible (10) selon l'une quelconque des revendications précédentes, et
l'élément isolant flexible (10), à l'état installé, est appliqué contre le premier corps isolant (1) et le deuxième corps isolant (2) de telle sorte qu'une interface conductrice (11) entre les corps isolants (1, 2) et l'élément isolant flexible (10) est diélectriquement fixe.

6. Appareillage de commutation haute tension à isolation gazeuse selon la revendication 5, comprenant en outre deux dispositifs de serrage (13) qui viennent en prise respectivement dans l'une des deux collerettes (12) et sont en cours de fonctionnement équilibrés par ressort.

7. Appareillage de commutation haute tension à isolation gazeuse selon l'une quelconque des revendications 5 à 6, dans lequel le moyen de connexion (5) présente des contacts (6) pour la connexion électrique avec les conducteurs (3, 4).

8. Appareillage de commutation haute tension à isolation gazeuse selon l'une quelconque des revendications 5 à 7, dans lequel le moyen de connexion (5) est en deux parties, en particulier sous forme de demi-coque.
